# EUROPÄISCHE PATENTSCHRIFT

(11) **EP 1 380 727 B1**
(45) Veröffentlichungstag und Bekanntmachung des Hinweises auf die Patenterteilung: **09.05.2007**
(21) Anmeldenummer: 02015201.3
(22) Anmeldetag: 08.07.2002
(51) Int. Cl.: F01D 25/30, F01K 23/10

(54) **Gasturbinenanlage mit einem Abgas-Kamin**
Gas turbine power plant with a by-pass stack
Centrale thermique à turbine à gaz avec cheminée de dérivation

(43) Veröffentlichungstag der Anmeldung: 14.01.2004
(73) Patentinhaber: SIEMENS AKTIENGESELLSCHAFT, 80333 München (DE)
(72) Erfinder: Schütz, Herbert, 91080 Uttenreuth (DE)

(56) Entgegenhaltungen:
- EP-A- 0 677 646
- DE-A- 4 040 703
- DE-A- 4 312 072
- DE-A- 19 737 507
- DE-C- 19 636 107
- US-A- 4 821 771
- US-A- 6 125 623
- US-A1- 2002 011 065

## Beschreibung

Die Erfindung betrifft eine Gasturbinenanlage.

Bei einer Gasturbinenanlage entsteht während ihres Betriebs Abgas, welches der Gasturbine entnommen und abgeführt werden muss.
Hierfür ist in der Regel die Errichtung eines speziellen Kamins nötig.

Ein derartiger Kamin ist auch notwendig und muss separat errichtet werden, wenn die Gasturbinenanlage mittels eines Dampferzeugers, in welchem das Abgas der Gasturbine zur Erzeugung von Dampf genutzt ist, und einer Dampfturbine zu einer Gas-und-Dampf-Turbinenanlage (GuD-Anlage) ausgebaut wird und ein Gasturbinenbetrieb bereits vor Fertigstellung der gesamten GuD-Anlage gewünscht ist ("vorgezogener Gasturbinenbetrieb").

Ein Abgaskamin mit einer Gasweiche ist aus DE-C-19636107 bekannt.

Der sogenannte Bypass-Kamin wird errichtet und zumindest solange zum Abführen des Abgases der Gasturbine eingesetzt, bis die die Dampfturbine betreffenden Komponenten installiert und betriebsbereit sind, so dass das Abgas der Gasturbine in den Abhitzedampferzeuger eingeleitet werden kann.

Die Errichtung eines derartigen Bypass-Kamins und dessen eventueller Rückbau nach Fertigstellung der GuD-Anlage sind aufwendig.

Der Erfindung liegt daher die Aufgabe zu Grunde, eine verbesserte Gasturbinenanlage mit einem Abgas-Kamin anzugeben, wobei der Abgas-Kamin besonders einfach und kostengünstig realisierbar sein soll.

Erfindungsgemäß wird die Aufgabe gelöst durch eine Gasturbinenanlage mit mindestens einer Gasturbine und einem Abgas-Kamin, wobei der Abgas-Kamin gebildet ist durch das Übergangsstück eines Dampferzeugers, in welches Abgas der Gasturbine einleitbar und durch eine Kaminöffnung aus dem Übergangsstück abführbar ist, wobei das Übergangsstück diejenige Komponente des Dampferzeugers umfasst, mittels welcher das Abgas einem dem Übergangsstück in Strömungsrichtung des Abgases nachgeordneten Kesselbereich des Dampferzeugers zuführbar ist, in welchem mindestens eine Heizfläche zur Erzeugung von Dampf angeordnet ist.

Die Erfindung geht dabei von der Überlegung aus, dass insbesondere in den Fällen, in denen die Errichtung einer GuD-Anlage mit vorgezogenem Gasturbinenbetrieb erfolgen soll, auf die Errichtung eines Bypass-Kamins zum Abführen des Abgases der Gasturbine verzichtet werden kann.

Die Funktion des Bypass-Kamins übernimmt im Zusammenhang mit der Erfindung das Übergangsstück eines Dampferzeugers, insbesondere des Dampferzeugers, welcher in einem späteren Stadium des Anlagenausbaus zur Dampferzeugung für eine Dampfturbine vorgesehen ist und komplett installiert werden soll. Beim Übergangsstück handelt es sich insbesondere um den in Strömungsrichtung des Abgases angeordneten Einlasskanal eines Dampferzeugers, mittels welchem das Abgas dem Kesselbereich des Dampferzeugers zuführbar ist.

Dadurch muss kein zusätzlicher Kamin installiert werden und ein Ausbau einer erfindungsgemäßen Gasturbinenanlage zu einer GuD-Anlage ist besonders einfach und kostengünstig durchführbar. Die Gasturbinenanlage kann in diesem Fall weiter betrieben werden und das Übergangsstück eines Dampferzeugers, welches als Abgas-Kamin dient, wird im Laufe der Ausbaumaßnahme um den Kesselbereich ergänzt zum Dampferzeuger, welcher noch mit einer Dampfturbine verbunden wird.

Die Erfindung bietet darüber hinaus den Vorteil, dass im Vergleich zu Lösungen aus dem Stand der Technik, bei welchen ein separater Bypass-Kamin für den vorgezogenen Gasturbinenbetrieb errichtet ist, die notwendigen Rohrleitungsverbindungen zur Dampfturbine verkürzt sind, insbesondere weil die Auslegung einer GuD-Anlage nicht durch einen separaten Bypass-Kamin beeinflusst wird und die Rohrleitungen daher so kurz wie möglich gehalten werden können.

Das Übergangsstück weist eine Dichtwand auf, mittels welcher das Austreten von Abgas aus dem Übergangsstück außer durch die Kaminöffnung verhindert ist.

Die Dichtwand verschließt dabei einen Übergangsbereich des Übergangsstücks, welcher in Strömungsrichtung des Abgases in den Kesselbereich mündet.

Bei einem Dampferzeuger ist der Übergangsbereich vom Übergangsstück in den Kesselbereich, wo die Heizflächen zur Dampferzeugung angeordnet sind, konstruktionsbedingt nicht vom Kesselbereich abgetrennt, da gerade die Einleitung des Abgases in den Kesselbereich gewünscht ist.

Bei dieser Ausführungsform ist ein Verschluss des Übergangsbereichs gegen den Kesselbereich mittels der Dichtwand vorgesehen, so dass zum einen das Abgas nur durch die Kaminöffnung des Übergangsstücks austreten kann und zum anderen der Ausbau des Dampferzeugers mittels Errichtung des Kesselbereichs voranschreiten kann, ohne dass der Gasturbinenbetrieb unterbrochen werden muss.

Die Dichtwand kann dabei insbesondere auch zum Schutz des Montagepersonals mit einer thermisch isolierenden Schicht versehen sein.

In einer vorteilhaften Ausführungsform der Erfindung ist die Kaminöffnung ausgebildet als ein im Vergleich zur Vertikalerstreckung des Übergangsstücks kurzer Strömungskanal, welcher bevorzugt einen rechteckigen Querschnitt aufweist.

Bei dieser Ausführungsform ist an geeigneter Stelle des Übergangsstücks ein "Kanalstummel" angeordnet, welcher als Austrittsöffnung für das Abgas dient. Ein derartiger kurzer Strömungskanal ist leicht herstellbar und kann leicht als Kaminöffnung in das Übergangsstück integriert oder an dieses angebaut werden.

Da das Übergangsstück bekannter Dampferzeuger oftmals im Wesentlichen kastenförmig ausgebildet ist, ist ein kurzer Strömungskanal mit rechteckigem Querschnitt besonders einfach im Zusammenhang mit der Erfindung realisierbar.

Bei einer erfindungsgemäßen Gasturbinenanlage ist die Kaminöffnung bevorzugt in einem Kopfbereich des Übergangsstücks angeordnet.

Der Kopfbereich des Übergangsstücks umfasst dabei insbesondere eine obere Begrenzungsfläche des Übergangsstücks.

In einer besonders bevorzugten Ausführungsform der Erfindung ist die Gasturbinenanlage zu einer Gas- und Dampfturbinenanlage erweiterbar, wobei das Übergangsstück mittels des Kesselbereichs zu einem funktionsfähigen Dampferzeuger erweiterbar, und mit dem Dampferzeuger eine Dampfturbine verbindbar ist.

Bei dieser Ausführungsform ist es besonders leicht möglich, ausgehend von einer erfindungsgemäßen Gasturbinenanlage zu einer Gas- und Dampfturbinenanlage zu gelangen, da keine größeren baulichen und/oder konstruktiven Änderungen und/oder Einrichtung von Hilfskomponenten der Gasturbinenanlage notwendig sind.

Der erfindungsgemäßen Gasturbinenanlage wird der Kesselbereich des Dampferzeuger hinzugefügt, wodurch der Dampferzeuger komplettiert ist, und im Weiteren wird der Dampferzeuger mit der Dampfturbine verbunden.

Nach Entfernen einer ggf. vorhandenen Dichtwand, welche einen Übergangsbereich des Übergangsstücks zum Kesselbereich verschließt, sowie nach Verschließen der Kaminöffnung des Übergangsstücks ist die so entstandene GuD-Anlage sofort einsatzbereit, ohne dass die evtl. provisorisch aufgebaute Hilfskomponenten, beispielsweise ein Bypass-Kamin, entfernt oder im Zusammenhang mit der Gasturbinenanlage konstruktiv ausgelegte Komponenten beim Übergang auf den GuD-Betrieb anders dimensioniert werden müssen.

Die Erfindung führt weiterhin zu einer Verwendung des Übergangsstücks eines Dampferzeugers, in welches Abgas der Gasturbine einleitbar und durch eine Kaminöffnung aus dem Übergangsstück abführbar ist, als Abgas-Kamin für eine Gasturbine, wobei das Übergangsstück diejenige Komponente des Dampferzeugers umfasst, mittels welcher das Abgas einem dem Übergangsstück in Strömungsrichtung des Abgases nachgeordneten Kesselbereich des Dampferzeugers zuführbar ist, in welchem mindestens eine Heizfläche zur Erzeugung von Dampf angeordnet ist.

Weitere vorteilhafte Ausgestaltungen der erfindungsgemäßen Verwendung sind in den auf die Verwendung zurückbezogenen Unteransprüchen niedergelegt.

Im Folgenden ist ein Ausführungsbeispiel der Erfindung näher dargestellt.

Es zeigt:

FIG eine erfindungsgemäße Gasturbinenanlage.

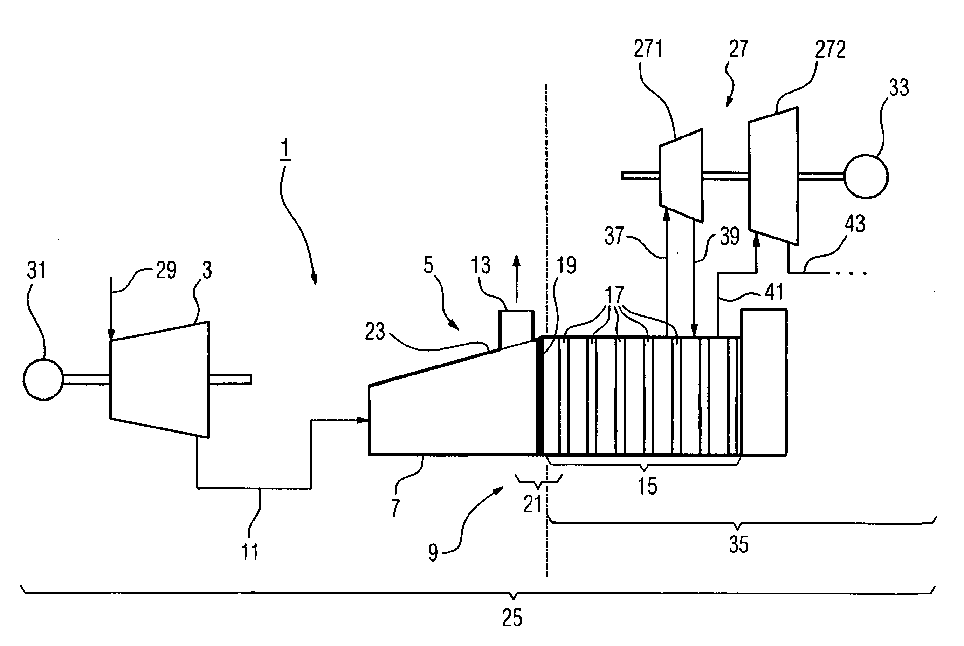

In der Figur ist eine erfindungsgemäße Gasturbinenanlage 1 dargestellt. In eine Gasturbine 3 ist zu deren Betrieb Rauchgas 29 eingespeist, welches mittels der Gasturbine 3 in Rotationsenergie umgesetzt und durch einen mit der Gasturbine 3 verbundenen Generator 31 in elektrische Energie umgewandelt wird.

Abgas 11 der Gasturbine 3 wird in das Übergangsstück 7 eines bekannten Dampferzeugers 9 eingeleitet.

Das Übergangsstück 7 bekannter Dampferzeuger 9 umfasst dabei diejenige Komponente bekannter Dampferzeuger, mittels welcher das Abgas 11 einem dem Übergangsstück 7 in Strömungsrichtung des Abgases 11 nachgeordneten Kesselbereich 15 des Dampferzeugers 9 zuführbar ist, wobei bei bekannten Dampferzeugern 9 im Kesselbereich 15 mindestens eine Heizfläche 17 zur Erzeugung von Dampf, beispielsweise für eine Dampfturbine 27, angeordnet ist.

Die Heizflächen 17 können dabei beispielsweise gebildet sein durch Dampferzeugerrohre.

Das Übergangsstück 7 weist erfindungsgemäß eine Kaminöffnung 13 auf, welche beispielsweise durch einen im Vergleich zur Vertikalerstreckung des Übergangsstücks 7 kurzen Strömungskanal gebildet ist, wobei dieser kurze Strömungskanal bevorzugt einen rechteckigen Querschnitt aufweist. Das in das Übergangsstück 7 eingeleitete Abgas 11 der Gasturbine 3 wird durch die Kaminöffnung 13 abgeführt, so dass ein Abgaskamin 5 gemäß der Erfindung gebildet ist durch das Übergangsstück 7 eines bekannten Dampferzeugers 9.

Bei einer erfindungsgemäßen Gasturbinenanlage 11 erübrigt sich daher die Errichtung eines Bypass-Kamins zum Abführen des Abgases 11 der Gasturbine 3, insbesondere dann, wenn in einem späteren Ausbauschritt der Gasturbinenanlage 1 Erweiterungskomponenten 35, welche einen Kesselbereich 15 des Dampferzeugers 9 und die Dampfturbine 27 umfassen, vorgesehen sind, um die Gasturbinenanlage 1 zu einer Gas- und Dampf-Anlage 25 zu erweitern.

Da in einem derartigen Fall die Errichtung des Dampferzeugers 9 ohnehin nötig ist, wird gemäß der Erfindung das Übergangsstück 7 des Dampferzeugers 9 installiert und als erfindungsgemäßer Abgaskamin 5 für das Abgas 11 der Gasturbine 3 benutzt. Bei einem späteren Ausbau der Gasturbinenanlage 1 kann dann das Übergangsstück 7 bestehen beleiben und mittels Hinzufügen des Kesselbereichs 15 zu einem funktionsfähigen Dampferzeuger 9 ergänzt werden.

Damit bei Betrieb der Gasturbinenanlage 1 das Abgas 11 nur über die vorgesehene Kaminöffnung 13 abgeführt wird, ist in einem Übergangsbereich 21 des Übergangsstücks 7, welcher in Strömungsrichtung des Abgases 11 in den Kesselbereich 15 mündet, eine Dichtwand 19 vorgesehen, welche den Übergangsbereich 21 verschließt, so dass das Abgas 11 nur über die Kaminöffnung 13 abgeführt wird.

Fasst man die Figur als Längsschnittdarstellung auf, so erstreckt sich die Dichtwand 19 quer zur Strömungsrichtung des Abgases 11.

Wenn die Gasturbinenanlage 1 mittels Hinzufügen der Erweiterungskomponenten 35 zu einer GuD-Anlage erweitert und in Betrieb genommen werden soll, so ist lediglich die Dichtwand 19 zu entfernen und die Kaminöffnung 13 zu verschließen, beispielsweise zu verschweißen, so dass das Abgas 11 der Gasturbine 3 in den Kesselbereich 15 des Dampferzeugers 9 eingeleitet werden kann, um dort im Wärmetausch mit den Heizflächen 17 Dampf für die Dampfturbine 27 zu erzeugen.

Die Dampfturbine 27 umfasst im vorliegenden Ausführungsbeispiel eine erste Turbinenstufe 271, beispielsweise eine Hochdruckstufe, und eine zweite Dampfturbinenstufe 272, beispielsweise eine Niederdruckstufe.

Der ersten Dampfturbinenstufe 271 wird in nicht näher dargestellter Weise vom Dampferzeuger 9 Betriebsdampf 37 zugeführt, welcher in der ersten Dampfturbinenstufe 271 zumindest einen Teil seiner Energie in Rotationsenergie wandelt und als teilentspannter Dampf 39 dem Dampferzeuger 9 zur Zwischenüberhitzung zugeführt wird. Der derart zwischenüberhitzte Dampf 41 wird der zweiten Dampfturbinenstufe 272 zugeführt, wo wiederum eine Energiewandlung in Rotationsenergie stattfindet. Die mittels der Dampfturbine 27 erzeugte Rotationsenergie wird mittels eines Generators 33 in elektrische Energie gewandelt.

Der die zweite Dampfturbinenstufe 272 verlassende Restdampf 43 kann beispielsweise einem Kondensator zugeführt werden.

Zusammengefasst besteht ein wesentlicher Vorteil einer erfindungsgemäßen Gasturbinenanlage 1 darin, dass das Abgas 11 der Gasturbine 3 mittels einer Komponente abgeführt wird, welche bei einer späteren Ausbaustufe der Anlage ohnehin benötigt wird und daher zum einen während des Betriebs der Gasturbinenanlage 1 die Funktion des Abgaskamins 5 übernimmt, so dass die Errichtung eines separaten Bypass-Kamins entfällt, und zum anderen belassen werden kann, wenn die Gasturbinenanlage zu einer GuD-Anlage ausgebaut wird.

## Patentansprüche

1. Gasturbinenanlage (1) mit mindestens einer Gasturbine (3) und einem Abgas-Kamin (5),
**dadurch gekennzeichnet, dass**
der Abgas-Kamin (5) gebildet ist durch ein Übergangsstück (7) eines Dampferzeugers (9), in welches Abgas (11) der Gasturbine (3) einleitbar und durch eine Kaminöffnung (13) aus dem Übergangsstück (7) abführbar ist, wobei das Übergangsstück (7) diejenige Komponente des Dampferzeugers (9) umfasst, mittels welcher das Abgas (11) einem dem Übergangsstück (7) in Strömungsrichtung des Abgases (11) nachgeordneten Kesselbereich (15) des Dampferzeugers (9) zuführbar ist, in welchem mindestens eine Heizfläche (17) zur Erzeugung von Dampf angeordnet ist und ferner das Übergangsstück (7) eine Dichtwand (19) aufweist, mittels welcher das Austreten von Abgas (11) aus dem Übergangsstück (7) außer durch die Kaminöffnung (13) verhindert ist.

2. Gasturbinenanlage (1) nach Anspruch 1,
**dadurch gekennzeichnet, dass**
die Dichtwand (19) einen Übergansbereich (21) des Übergangsstücks (7) verschließt, welcher in Strömungsrichtung des Abgases (11) in den Kesselbereich (15) mündet.

3. Gasturbinenanlage (1) nach einem der Ansprüche 1 und 2,
**dadurch gekennzeichnet, dass**
die Kaminöffnung (13) ausgebildet ist als ein im Vergleich zur Vertikalerstreckung des Übergangsstücks (7) kurzer Strömungskanal, bevorzugt mit rechteckigem Querschnitt.

4. Gasturbinenanlage (1) nach einem der Ansprüche 1 bis 3,
**dadurch gekennzeichnet, dass**
die Kaminöffnung (13) in einem Kopfbereich (23) des Übergangsstücks (7) angeordnet ist.

5. Gasturbinenanlage (1) nach einem der Ansprüche 1 bis 4,
**dadurch gekennzeichnet, dass**
die Gasturbinenanlage (1) zu einer Gas-und-Dampf-Turbinenanlage (25) erweiterbar ist, wobei das Übergangsstück (7) mittels des Kesselbereichs (15) zu einem funktionsfähigen Dampferzeuger (9) erweiterbar, und mit dem Dampferzeuger (9) eine Dampfturbine (27) verbindbar ist.

6. Verwendung eines Übergangsstücks (7) eines Dampferzeugers (9), in welches Abgas (11) einer Gasturbine (3) einleitbar und durch eine Kaminöffnung (13) aus dem Übergangsstück (7) abführbar ist, als Abgas-Kamin (5) für eine Gasturbine (3), wobei das Übergangsstück (7) diejenige Komponente des Dampferzeugers (9) umfasst, mittels welcher das Abgas (11) einem dem Übergangsstück (9) in Strömungsrichtung des Abgases (11) nachgeordneten Kesselbereich (15) des Dampferzeugers (9) zuführbar ist, in welchem mindestens eine Heizfläche (17) zur Erzeugung von Dampf angeordnet ist und ferner das Übergangsstück (7) eine Dichtwand (19) aufweist, mittels welcher das Austreten von Abgas (11) aus dem Übergangsstück (7) außer durch die Kaminöffnung 13 verhindert ist.

7. Verwendung nach Anspruch 6,
**dadurch gekennzeichnet, dass**
die Dichtwand (19) einen Übergansbereich (21) des Übergangsstücks (7) verschließt, welcher in Strömungsrichtung des Abgases (11) in den Kesselbereich (15) mündet.

8. Verwendung nach einem der Ansprüche 6 und 7,
**dadurch gekennzeichnet, dass**
die Kaminöffnung (13) ausgebildet ist als ein im Vergleich zur Vertikalerstreckung des Übergangsstücks (7) kurzer Strömungskanal, bevorzugt mit rechteckigem Querschnitt.

9. Verwendung nach einem der Ansprüche 6 bis 8,
**dadurch gekennzeichnet, dass**
die Kaminöffnung (13) in einem Kopfbereich (23) des Übergangsstücks (7) angeordnet ist.

## Claims

1. Gas turbine plant (1) with at least one gas turbine (3) and with an exhaust gas chimney (5), **characterized in that** the exhaust gas chimney (5) is formed by a transition piece (7) of a steam generator (9), into which transition piece exhaust gas (11) from the gas turbine (3) can be introduced and can be discharged from the transition piece (7) through a chimney orifice (13), the transition piece (7) comprising that component of the steam generator (9) by means of which the exhaust gas (11) can be supplied to a boiler region (15) of the steam generator (9), said boiler region following the transition piece (7) in the direction of flow of the exhaust gas (11) and having arranged in it at least one heating surface (17) for the generation of steam and furthermore that the transition piece (7) has a sealing wall (19), by means of which the emergence of exhaust gas (11) from the transition piece (7), except for the chimney orifice (13), is prevented.

2. Gas turbine plant (1) according to claim 1, **characterized in that** the sealing wall (19) closes a transitional region (21) of the transition piece (7), said transitional region issuing into the boiler region (15) in the direction of flow of the exhaust gas (11).

3. Gas turbine plant (1) according to one of claims 1 and 2, **characterized in that** the chimney orifice (13) is designed as a flow duct which is short in comparison with the vertical extent of the transition piece (7) and which preferably has a rectangular cross section.

4. Gas turbine plant (1) according to one of claims 1 to 3, **characterized in that** the chimney orifice (13) is arranged in a head region (23) of the transition piece (7).

5. Gas turbine plant (1) according to one of claims 1 to 4, **characterized in that** the gas turbine plant (1) can be extended to form a combined-cycle turbine plant (25), the transition piece (7) being capable of being extended to form an operational steam generator (9) by means of the boiler region (15), and a steam turbine (27) being capable of being connected to the steam generator (9).

6. Use of a transition piece (7) of a steam generator (9), into which transition piece exhaust gas (11) from a gas turbine (3) can be introduced and can be discharged from the transition piece (7) through a chimney orifice (13), as an exhaust gas chimney (5) for a gas turbine (3), the transition piece (7) comprising that component of the steam generator (9) by means of which the exhaust gas (11) can be supplied to a boiler region (15) of the steam generator (9), said boiler region following the transition piece (9) in the direction of flow of the exhaust gas (11) and having arranged in it at least one heating surface (17) for the generation of steam and furthermore that the transition piece (7) has a sealing wall (19), by means of which the emergence of exhaust gas (11) from the transition piece (7), except through the chimney orifice (13), is prevented.

7. Use according to claim 6, **characterized in that** the sealing wall (19) closes a transitional region (21) of the transition piece (7), said transitional region issuing into the boiler region (15) in the direction of flow of the exhaust gas (11).

8. Use according to one of claims 6 and 7, **characterized in that** the chimney orifice (13) is designed as a flow duct which is short in comparison with the vertical extent of the transition piece (7) and which preferably has a rectangular cross section.

9. Use according to one of claims 6 to 8, **characterized in that** the chimney orifice (13) is arranged in a head region (23) of the transition piece (7).

## Revendications

1. Installation (1) de turbine à gaz comprenant au moins une turbine (3) à gaz et une cheminée (5) pour les gaz d'échappement,
**caractérisée en ce que** la cheminée (5) pour les gaz d'échappement est formée par une pièce (7) de transition d'un générateur (9) de vapeur dans lequel du gaz (11) d'échappement de la turbine (3) à gaz peut être envoyé et peut être évacué de la pièce (7) de transition par une ouverture (13) de cheminée, la pièce (7) de transition comprenant les éléments du générateur (9) de vapeur au moyen desquels le gaz (11) d'échappement peut être envoyé à une zone (15) de chaudière du générateur (9) de vapeur qui est en aval de la pièce (7) de transition dans le sens du courant, zone dans laquelle est disposée au moins une surface (17) de chauffe pour la production de vapeur et, en outre, la pièce (7) de transition a une paroi (19) d'étanchéité au moyen de laquelle la sortie du gaz (11) d'échappement de la pièce (7) de transition vers l'extérieur en passant par l'ouverture (13) de la cheminée est empêchée.

2. Installation (1) de turbine à gaz suivant la revendication 1,
**caractérisée en ce que**
la paroi (19) d'étanchéité ferme une zone (21) de transition de la pièce (7) de transition, qui débouche dans le sens du courant du gaz (11) d'échappement dans la zone (15) de chaudière.

3. Installation (1) de turbine à gaz suivant l'une des revendications 1 et 2,
**caractérisée en ce que**
l'ouverture (13) de cheminée est constituée sous la forme d'un canal d'écoulement court par rapport à l'étendue verticale de la pièce (7) de transition et ayant de préférence une section transversale rectangulaire.

4. Installation (1) de turbine à gaz suivant l'une des revendications 1 à 3,
**caractérisée en ce que**
l'ouverture (13) de cheminée est disposée dans une partie (23) de tête de la pièce (7) de transition.

5. Installation (1) de turbine à gaz suivant l'une des revendications 1 à 4,
**caractérisée en ce que**
l'installation (1) de turbine à gaz peut être étendue à une installation (25) de turbine à gaz et de turbine à vapeur, la pièce (7) de transition pouvant être étendue au moyen de la zone (15) de chaudière en un générateur (9) de vapeur apte à fonctionner et une turbine (27) à vapeur pouvant communiquer avec le générateur (9) de vapeur.

6. Utilisation d'une pièce (7) de transition d'un générateur (9) de vapeur dans lequel du gaz (11) d'échappement d'une turbine (3) à gaz peut être envoyé et peut être évacué de la pièce (7) de transition par une ouverture (13) de cheminée en tant que cheminée (5) de gaz d'échappement d'une turbine (3) à gaz, la pièce (7) de transition comprenant les éléments du générateur (9) de vapeur au moyen desquels le gaz (11) d'échappement peut être envoyé à une zone (15) de chaudière en aval de la pièce (7) de transition dans le sens du courant du gaz (11) d'échappement, zone dans laquelle est disposée au moins une surface (17) de chauffe pour la production de vapeur et la pièce (7) de transition ayant, en outre, une paroi (19) d'étanchéité au moyen de laquelle la sortie du gaz (11) d'échappement de la pièce (7) de transition vers l'extérieur en passant par l'ouverture (13) de la cheminée est empêchée.

7. Utilisation suivant la revendication 6,
**caractérisée en ce que**
la paroi (19) d'étanchéité ferme une zone (21) de transition de la pièce (7) de transition, qui débouche dans le sens du courant du gaz (11) d'échappement dans la zone (15) de chaudière.

8. Utilisation suivant la revendication 6 et 7,
**caractérisée en ce que**
l'ouverture (13) de cheminée est constituée sous la forme d'un canal d'écoulement court par rapport à l'étendue verticale de la pièce (7) de transition et ayant de préférence une section transversale rectangulaire.

9. Utilisation suivant la revendication 6 à 8,
**caractérisée en ce que**
l'ouverture (13) de cheminée est disposée dans une partie (23) de tête de la pièce (7) de transition.
